# EUROPEAN PATENT SPECIFICATION

(11) **EP 1 957 300 B1**
(45) Date of publication and mention of the grant of the patent: **08.04.2015**
(21) Application number: 05810099.1
(22) Date of filing: 01.12.2005
(51) Int. Cl.: B60H 3/00, B60H 1/00, G08G 1/09, G08G 1/0967

(54) **A SYSTEM FOR AUTOMATICALLY CONTROLLING AIR INTAKE IN A VEHICLE**
SYSTEM ZUR AUTOMATISCHEN STEUERUNG DER LUFTANSAUGUNG IN EINEM FAHRZEUG
SYSTEME DE COMMANDE AUTOMATIQUE DE L'ADMISSION D'AIR DANS UN VEHICULE

(43) Date of publication of application: 20.08.2008
(73) Proprietor: VOLVO LASTVAGNAR AB, 405 08 Göteborg (SE)
(72) Inventor: HAGBERG, Yngve, S-417 02 Göteborg (SE)
(74) Representative: Fröhling, Werner Otto
(86) International application number: PCT/SE2005/001827
(87) International publication number: WO 2007/064269

(56) References cited:
- EP-A- 1 302 746
- EP-A1- 1 354 738
- WO-A-03/000513
- WO-A1-03/000513
- DE-A1- 10 315 047
- US-A- 6 108 602
- US-A1- 2005 021 224
- US-B2- 6 509 833

## Description

The present invention relates to a system for automatically controlling air intake in a vehicle. The present invention further relates to an alert system and a vehicle air intake control device for use in such system.

Driver safety during vehicle transportation is of particular concern in road safety, and several systems have been developed in order to enhance safety by different measures.

One safety concern is how to avoid that the driver and possibly other occupants, such as passengers and/or animals being transported inside a moving or parked vehicle, is being exposed to airborne hazards such as dangerous airborne gases and/or particulates, e.g. smoke from external fires, gases from the same or other vehicle exhausts, gases from ruptures from ground led gas pipelines and effluents from accidents with transported liquid and gaseous materials, and particulates, for example smoke or dust particles, microbes, radioactive fall out, exhaust particles etc.

If the vehicle is a large vehicle, such as a truck, bus or work machine, it is particularly important to protect the driver, because if the driver of such large vehicle is incapacitated extensive damages may result to the exterior, due to the momentum of such large vehicle, and to the interior, e.g. other occupants of the vehicle or items being transported.

A particular safety concern is in relation to emergency situations, in which such potentially toxic or otherwise dangerous airborne hazards are produced, e.g. a city experiencing a SMOG-alarm, or a gas line rupture sending out toxic or combustible gases, or fires developing hazardous smoke, which airborne hazards are affecting a smaller or larger geographical area and may vary in extent over time and area.

Airborne hazards spreading across possibly wide areas expose occupants in both parked and moving vehicles at a risk.

It is widely known to use gas sensors in controlling individual automobile ventilators, in which e.g. NOₓ exhaust from diesel cars is the object of detection for increasing driver comfort. Examples of such devices may be found in US 5,980,378, US 5,320,577, DE 28 41 305, EP 1 422 089, US 2004/065204. However, when providing a vehicle borne air pollution sensor, the vehicle is already inside the pollution cloud, when a positive measurement is being made, and thus protective measures like automatic closure of vehicle air intake may be performed too late to be effective. Further, such sensors are often sensitive to only one or a few types of gas and complex to read correctly and thus accurate sensors are relatively expensive.

In United States patent no. US 6,108,602 is described a control system for a vehicle, comprising a navigation device using GPS-data and storing a road-network and locations of covered road areas, such as tunnels and parking houses, which system may further comprise a pollutant sensor on the vehicle. This system is not suitable for emergency situations as the position and extent of the hazardous air congestion, in contrast to tunnels and houses, is not known in advance and is not geostationary, i.e. it may continuously be changing over time in geographic extent and location.

In international application WO 03/000513 is described a climate control system comprising position location means i.e. a GPS positioning means, data reception, transmission and processing means for amongst others receiving data from remote environmental data sources, such as a weather satellite or monitoring stations, and climate control means for altering the vehicle climate in response to either environmental conditions at the vehicle's present location or ahead of said vehicle, including temperature sensors inside the driver compartment. The remote data sources may also include monitors measuring different gas levels, such as NOₓ, SO₂ and CO₂ levels. However, for the system to be suitable during emergency situations it requires an extensive and fine-meshed monitoring network, which is not cost effective.

EP 1302746 A1 describes a system for controlling a comfort system of a vehicle. The system is arranged in a vehicle and comprises a computing device which is connected with a position input connection for receiving vehicle position information from a positioning system. The system can activate, based on extracted information from said input connection and said map database, at least one function of said comfort system.

US 2005/0021224 describes as closest prior art document a control system comprising a hazard countermeasure controller which is arranged in a vehicle, which acquires the position of the vehicle and the position of a potential hazard. The hazard countermeasure controller determines, depending on the acquired information, if a hazard countermeasure is to be performed and in that case, which hazard countermeasure that is to be performed.

DE 10315047 A1 describes a position-dependent control device for controlling vehicle functions arranged in a vehicle. Depending on the position of the vehicle and on the other information, the control device determines what action to take.

Further, the gas or pollutant in question discharged during an emergency may not be one that is recordable by the above mentioned monitoring networks or vehicle borne sensors, e.g. gaseous hydrochloric acid (HCl) from a road transport accident not being sensed by NOₓ-sensors.

A known approach is to transmit a radio delivered message concerning an airborne hazard to the driver, instructing him to manually close the air intake to the driver's cabin and/or the other vehicle compartments. However, there is a risk of failure in situations where the driver is not able to perform this manual closure because he is e.g. asleep in the truck while parked or is busy with driving the vehicle safely, thus being hindered from performing manual air intake closure in due time for preventing said airborne hazards entering the driver's cabin.

On this background it is an object of the present invention to provide a system for protecting driver and possibly other vehicle occupants in vehicles parked in, passing and/or entering through areas affected by airborne hazards, which system does not have the above mentioned disadvantages of the prior art, and is able to cause an automatic closure of vehicle air intake before entering into said hazards in order to prevent outside air comprising airborne hazards from entering into the vehicle, which reduces the risk of injuries to the vehicle occupants.

According to the present invention there is provided a system for automatically controlling air intake in a vehicle, according to claim 1.

Accordingly, the determination and effectuation of an effective and safe closure of the vehicle air intake means advantageously precedes the entry of any vehicle provided with a vehicle air intake control device into an airborne hazard or alternatively precedes the arrival of such airborne hazard to a certain area in which the vehicle is already present. Further, a determination to activate the automatic vehicle intake closure may be taken irrespective of type of gas or pollutant the airborne hazard includes, and of the driver being aware of the approaching danger. Accordingly, any vehicle driver and possible occupants may be automatically protected against harmful gases and pollutants emanating from emergencies.

Said system may automatically control the vehicle air intake control device for one or more vehicles, where the number of vehicles is unlimited. The vehicles may be of different types, such as a selection of automobiles, trucks, work machines, busses etc.

With these measures, the vehicle or vehicles may automatically be changed to a favourable air intake operating state, depending on whether a presence of an airborne hazard is detected. A closed mode for the air intake means is favourable, e.g. when the vehicle in question is being inside, travelling through or past said geographical area, which is being subjected to airborne hazards. An open mode is favourable, e.g. when the vehicle in question is leaving said hazard area, or alternatively when the hazard is moving away from an area, in which the vehicle is located at that time.

A particular advantage of the invention is the fact that the transmittal of said control signal may have been made in advance, before the vehicle or vehicles provided with the system enter said spatially changing geographical hazard area, which provides the time necessary to close the vehicle air intake means effectively before the vehicle is surrounded by the airborne hazard. Further, the determination to close the air intake may be made independently from any vehicle, which fact exempts the driver or drivers from the act of closing the air intake manually, which further enhances road safety.

Further, it is not necessary to continuously monitor or sense external harmful gases, instead the system according to the invention is activated by an control signal in the confirmed event of an area specific airborne hazard, and accordingly the system is effective irrespective of the type and how harmful the gases or particulates are, which are being emanated or the type or level of emergency or hazard state being encountered.

A further advantage is that the system is applicable also when the vehicle is outside a given road network, e.g. working in a worksite or travelling off-road, i.e. no navigational information concerning the road being travelled is necessary.

Accordingly, a system is provided for protecting driver and possibly other vehicle occupants in vehicles parked in, passing and/or entering through areas affected by airborne hazards, which system is able to cause an automatic closure of vehicle air intake before the vehicle is entering into said hazards in order to prevent outside air comprising airborne hazards from entering into the vehicle, which reduces the risk of injuries to the vehicle occupants, especially the driver.

In one embodiment of the system for automatically controlling air intake in at least one vehicle the control signal for switching to said closed mode is different from the control signal for switching to said open mode. Thus, a possibility of distinguishing between control signals is provided for said system, which enables a more complex control of the vehicle air intakes under the control of the present system, depending on whether or not the vehicle or vehicles are approaching or leaving the hazard area. Alternatively, the control signal may be the same signal both for closing and opening the air intake, which is advantageous when all control signal transmitting means, e.g. within a given area, is transmitting the same control signal.

According to the invention, the control signal is a wireless signal. Thus, the system is provided with a control signal well before the vehicle or vehicles are entering into a hazard area, and the signal is being transmitted substantially instantaneous to the vehicles in the receiving vicinity of the control signal transmitter or transmitters. The wireless signal may be a cellular phone signal, a radio signal, a wireless computer network signal, or the like.

In a further embodiment of the system according to the invention said vehicle is a large vehicle, in particular a truck. Alternatively, any type of land, sea or air vehicle may comprise the system according to the invention, which vehicle is provided with air intake means that can be closed. However, when the vehicle is a large vehicle such as a truck, road safety may be greatly enhanced due to the fact that impacts from large vehicles e.g. transporting heavy goods may thus be avoided, by the fact that the driver is protected from dangerous gases by the system according to the invention while he is driving the large vehicle.

According to the invention said information providing means are provided externally from the vehicle. The information providing means may e.g. be different airborne hazard information resources, such as basic media or driver distributed information concerning an airborne hazards, e.g. resulting from emergencies, and/or information from monitoring networks, vehicle sensors, satellite surveillance, emergency management agency data, or combinations thereof, provided to the means for determination by a fleet management central or the like. This increases the time available for closing the air intakes of the vehicles using the system.

According to the invention it is comprising information analysis means comprising processing means for determining if the air intake means in said vehicle is to be controlled based on the collected information. The means for determination are located externally from the vehicle, and the determination may be made centrally or locally, e.g. by a fleet management system administrator, and may be taken either automatically, e.g. by a monitoring system, or by human analysts. The determination may be based on said information resources. Thus, the advantage of vehicle external determination being that this provides time to close the vehicle air intakes on vehicles before these enter into hazard areas.

In a further embodiment of the system and alert system according to the invention said determination is based on the fact of said airborne hazard being in the vicinity of said transmitting means. Accordingly, the reception of a control signal is depending on whether the vehicle is within receiving distance of the transmitter means, which makes the automatic air intake control site specific. For example, one transmitter transmits a control signal only to a local area, which area is affected by the airborne hazard and every vehicle within said area and provided with the system is closed. Said control signal transmitters may be one or more remotely located transmitters from the vehicle in question, e.g. one, a selected number of senders or all senders. If one control signal transmitter is used, it is preferably the one transmitter being closest to the hazard, which reduces the transmitter capacity needed.

In yet another embodiment of the system and alert system according to the invention said transmitting means is a selected group of transmitters, where the selection of said group of transmitters is based on the fact that the geographical extent and location of said airborne hazard is in the vicinity of said group of transmitters. Accordingly, said airborne hazard is within sending distance of said control signal transmitter means, i.e. the area in which the control signal may be received by a vehicle is substantially equal to the hazard extent area. Thus, a group of control signal senders are selected, which are located within the geographical area being affected by said airborne hazard, and no geographical data is necessary for an effective automatic air intake closure than the fact that a vehicle is within receiving distance from any such sender of the group.

In yet another embodiment of the system and alert system according to the invention said transmitting means is arranged to transmit said control signal intermittently or continuously over a given period of time. This is advantageous in the case in which said airborne hazard is within sending distance of said control signal transmitter means, because then the area in which the control signal may be received by a vehicle is substantially equal to the hazard extent area. The intermittent signal may be sent out with a constant or varying intermittent time period, depending on different factors, such as transmitter density in an area, update interval for the hazard presence information or the hazard movements.

In a preferred embodiment of the system and alert system according to the invention at least said information analysis means is provided integrally with a vehicle fleet management system external to the vehicle. Said vehicle fleet management system may for example be the external part of the DynaFleet® system as delivered by the applicant, which will be further described below. Thus, the alert system providing the information analysis means is an integral part of a fleet management system, reducing the costs of installation.

In one embodiment of the device and system according to the invention it is arranged to control said air intake means to be switched between said open mode and said closed mode based on the reception of two different signals, one for each mode. This embodiment provides for a simple device providing effective automatic closure and opening of the air intake, which depends on the state of said air intake closure means are in, when the device receives the control signal.

In an alternative embodiment of the device and system according to the invention it is arranged to control said air intake means to switch to said closed mode based on the reception of the control signal. This embodiment provides for a simple device providing effective automatic closure of the air intake.

The two latter embodiments reduce the overall device costs and maintenance requirements of the device.

In further embodiments of the system and device according to the invention said receiving means is a cellular phone, a radio and/or a satellite receiver. Accordingly, different receiver types may be used, e.g. depending on geographical area inside which the vehicle is going to operate, or type of vehicle used. For example, the preferred receiver is a cellular phone receiver in geographical areas where cellular phone senders are providing an extensive, covering network of airborne hazard control signal transmitters, i.e. in industrialised countries towns.

In one embodiment of the system and device said processing means is further arranged to control said air intake means to switch to said open mode based on the absence of receiving the control signal within a predetermined opening time interval. Accordingly, if the vehicle is moving away from the affected area or alternatively the hazard cloud is moving away from the vehicle (or both), the system is not receiving an control signal comprising a close signal. Thus, there is provided an automatic re-opening of the vehicle air intake means, which reduces the risk of providing an uncomfortable breathing environment for the driver during extended periods of air intake closed mode. This may be the case when only one control signal S (for closing) is transmitted and no further, or alternatively when a site specific control signal S is utilized i.e. when a hazard area is being covered by transmitted control signals for an automatic air intake closure. In this case the device on the vehicle leaving said hazard area is enabled for opening the air intake again, when no further control signal reaches the receiver means within said opening time interval. This may be chosen appropriately, depending on e.g. hazard type, vehicle speed, or be preset either to a constant time period, or a centrally selected variable opening time period. It may be an advantage in the case of said system being utilized by mistake, in which case transmitting another control signal for air intake re-opening is not necessary.

In an alternative embodiment of the system and device according to the invention said processing means is arranged to control said air intake means to switch to said open mode based on the reception of the control signal. Hence, an active control signal is transmitted for opening the air intake, e.g. based on a determination, that there is no longer any danger being posed to the vehicle occupants. This control signal may be a specific simple control signal, e.g. comprising a predetermined code, message, or being transmitted on a specific frequency. Further, the control signal may be one and the same signal for both closed and open mode, or two different signals, one for each mode. Such active open signal reduces the time period necessary for the closed operating mode and thus reduces further the risk of providing an uncomfortable breathing environment for the driver during extended closed mode periods. Accordingly, the closed mode is maintained until either the vehicle has left the affected area, or alternatively the cloud has left the area around the vehicle. This reduces the possibility of opening the air intake too early and lowers the risk of injuries to the vehicle occupants.

In another embodiment of the system and device according to the invention said air intake means comprise an air intake closure which may be switched to close in the closed mode and open in the open mode. The air intake means is closed in any suitable way known to the skilled person, either providing a mechanical flap, louver, or valve closing inside the fresh air intake system, or the ventilation system is closed down electronically, or the like. Thus, a simple, yet effective closure of the vehicle air intake is provided.

In another embodiment of the system and device according to the invention said air intake means comprise ventilation means arranged for air recirculation in the closed mode. Where the vehicle is provided with air re-circulation means, the driver comfort is improved by the removal of driver breathing generated CO₂ by said ventilation control means.

In yet another embodiment of the system and device according to the invention said air intake means further comprise window actuator means. Thus, the vehicle windows are closed automatically in the event of approaching airborne hazards, further enabling an automatic and effective air intake closure. The closing windows may preferably be safeguarded from harming limbs in the closure movement by providing detection means.

In yet another embodiment of the system and device said air intake means is arranged to switch to said closed mode independently for each respective vehicle compartment containing occupants, such as the driver's compartment, passenger's compartment, and/or transport compartment. Thus, individualized compartmental protection is provided, which protection may be different depending on number and type of occupants in said compartments.

Thus, any vehicle fitted with a device according to the invention and entering into an affected area being provided with an alert system according to the invention have their air intake closed automatically, irrespective of the moment in time said vehicle makes this entry in relation to hazard cloud build up and movement.

In the following, the invention will be described in more detail with reference to the accompanying schematic drawings, in which:
- Fig. 1: is a view of a system according to the invention wherein a truck comprising a device according to the invention is entering into an area affected by an airborne hazard and provided with an alert system according to the invention;
- Fig. 2: is an overview of a vehicle air intake control device according to a first embodiment of the invention.

In the following, the present invention is described in relation to an example in which the vehicle in question is a truck and the safety issue is to protect the truck driver from airborne hazards present outside the truck. However, it is to be noted that the system according to the invention may alternatively be used in relation to any type of land, sea or air vehicle, such as in particular large vehicles comprising trucks, busses, trains, heavy machinery, and the like, which air intake may be closed off to protect a driver and possible occupants. Further, when transporting other occupants such as passengers or live animals in the same or one or more different vehicle compartments, these may be included for protection.

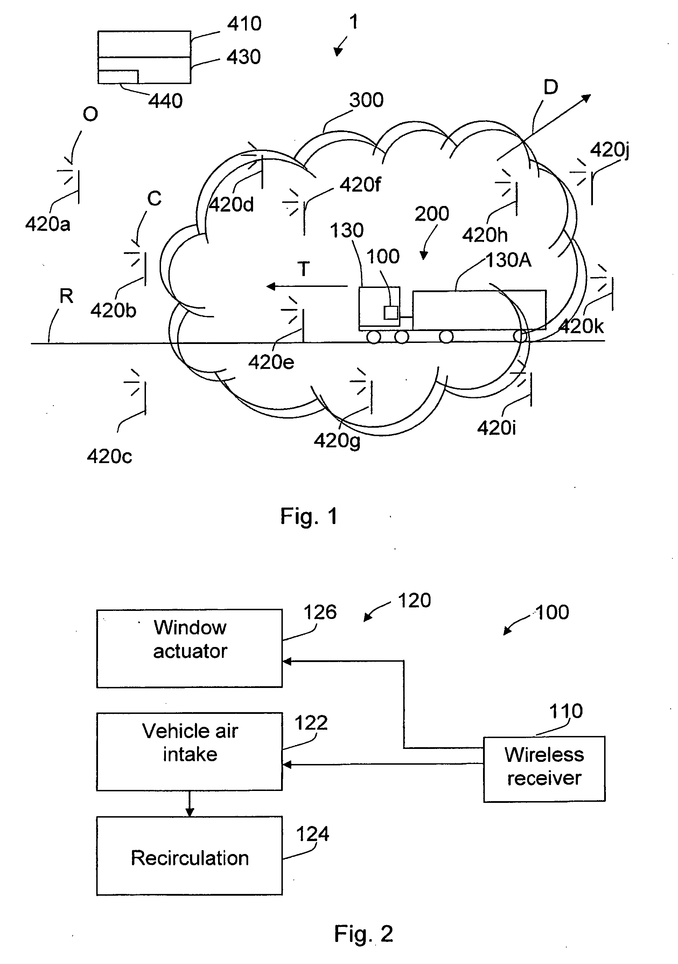

In fig. 1 is highly schematically shown a truck 200 travelling on a road R in a direction indicated by the arrow T. The truck 200 is travelling into a hazardous cloud 300 of gas, e.g. hydrochloric acid originating from a transport accident, which is covering a geographical area, the extent and location of which is changing over time as indicated with the arrow D.

The system 1 according to the present invention for automatically controlling air intake in a vehicle comprises a vehicle air intake control device 100 provided in the truck 200, one for each vehicle, for automatically opening and closing the vehicle air intake, and further comprises an alert system 400 comprising information providing means 410 for providing information concerning the presence of the airborne hazard 300 and transmitters 420 arranged for transmitting a control signal S based on said information.

As shown in fig. 2, a first embodiment of said vehicle air intake control device 100 in the truck 200 comprises a cellular phone receiver 110 for receiving the control signal S, and air intake means 120 arranged for switching between an open mode and a closed mode in the driver's cabin 130 based on the reception of the control signal S by said receiver 110.

The air intake means 120 further comprises an air intake closure 122, which may be switched to close in the closed mode and open in the open mode. This closure 122 may be provided in either integrally with the air intake, and/or air intake piping, and/or with the vehicle ventilation system any suitable way known to the skilled person, e.g. either providing a mechanical flap, louver, or valve closing inside these for stopping or halting the exchange of outside fresh air with the air in the driver's cabin, or by the ventilation system being closed down mechanically or electronically, or the like. Thus, a simple, yet effective closure of the vehicle air intake is provided in order to eliminate exchange of compartment air with the outside air, which may contain an airborne hazard. The air intake means 120 may further comprise recirculation means 124 provided either with the vehicle ventilation system on the truck or with the air intake directly for a circulation of compartment air for improving driver comfort while the air intake is closed by making a better use of the oxygen present in the compartment volume. The means 120 may further comprise window actuators 126 for an effective and extensive closure of the driver's cabin and/or other compartments 130A in the truck housing occupants.

The air intake means 120 may be closed in any suitable way known to the skilled person, either providing a mechanical flap, louver, or valve closing inside the fresh air intake system, and/or the ventilation system is closed down electronically, and/or windows are closed electronically, or the like.

Returning to fig. 1, the truck 200 may transport other occupants besides the driver, e.g. cattle or pigs, in which case the air intake means 120 control the air intake for each compartment either individually or collectively, i.e. the drive's cabin 130 and the transport compartment 130A, preferably being individually controllable, such that the driver's cabin may be prioritized if desired in order to increase road safety e.g. when a truck has an incapacitated driver by the fumes in the hazardous cloud and thus may form a risk for the external environment.

As mentioned above, the alert system 400 is provided with information concerning the presence, i.e. location and/or extent of the airborne hazard 300 emanated by the hydrochloric acid transport accident. Said information is collected by information providing means 410 e.g. a centrally located vehicle company management (not shown) who are listening to broadcasts of radio messages from the news media concerning the accident and the confirmed presence of the airborne hazard 300. Based on said information, the management transmits the control signal S from said transmitters 420. An alternative to a human collecting of data is obviously an automatic information providing means 410, e.g. a computer collecting data from one or more airborne hazard data sources. Preferably, said information providing means 410 is provided integrally with a truck fleet management system (not shown), e.g. the DynaFleet® system, which will be described further below.

The hazard data sources may comprise e.g. emergency management agency data providers, meteorology and gas monitoring networks, vehicle bound sensors, satellite surveillance, and/or other airborne hazard information resources, e.g. media such as radio, television, Internet or computer assisted net services, such as SMS- or email messages or driver distributed information concerning an airborne hazard, management agency data, or combinations thereof. The airborne hazard data may further comprise type and amount of airborne hazard, exposure time period, gas cover area, i.e. extent and location, etc.

Said information concerning the presence of an airborne hazard may be provided to the information providing means 410 by a fleet management central or the like. This increases the time available for closing the air intakes of the vehicles using the system. Alternatively, the information providing means 410 may be located on one or more vehicles using the system, e.g. drivers or sensors on or in the vehicles.

The determination whether to in fact close vehicle air intake based on said collected information is taken either by human analysts or automatically, i.e. by information analysis means 430 provided externally from said vehicle, e.g. in said fleet management system, which means 430 will be discussed further below. The determination to perform vehicle air intake closure may alternatively be performed e.g. by a human analyst or team of analysts, or by the operator or operators of the above mentioned truck fleet management system, or with the cellular phone provider transmitting the control signal S.

Said system 1 according to the invention comprises receiving means 110 to receive control signals S from said control signal transmitters 420 in such a way, that the occupants of the truck will be protected well before the truck enters into the hazardous cloud 300 or at least when the information providing means have provided a positive identification of the presence of an airborne hazard. Said control signals S are thus wireless signals, such as cellular phone signals, radio signals, and may take any suitable form known to the skilled person, e.g. a predetermined coded signal, and/or sent out on a predetermined frequency, a cellular phone SMS-message containing coded data, e-mail-messages, or other signal, and may comprise specific data or frequency, which indicate towards said system 110, that an control signal S has been received.

Accordingly, the wireless control signal transmitters 420 and receivers 110 may be cellular phone using e.g. SMS-messages, radio using e.g. the RDS-system or satellite transmitters/receivers, in the latter case covering larger, less densely populated areas, e.g. where cellular phone networks are not available. Other wireless transmitters/receivers may be wireless LAN or WAN network transmitters/receivers.

A control signal is utilized comprising information whether to close or open the air intake, which is independent upon the mode in which the air intake was in when the control signal arrives.

The control signal S comprises information either to close or to open the air intake, e.g. by the system 1 transmitting a close signal C and an open signal O, which are different from each other, and discernible by the system 1. This allows for a more detailed control with the vehicle intakes, which depends upon whether the truck 200 in question is in the vicinity or inside the area being affected by the airborne hazard 300, in which case the control signal is a close signal C being transmitted by said transmitters 420, or whether it 200 is outside said area, in which case the control signal is an open signal O being transmitted by said transmitters 420. The control signal C, O may be relayed by one or more control signal transmitters 420, e.g. one or more selected groups of transmitters 420, e.g. a first selected group inside the area affected transmitting the close signal C, and a second selected group around the periphery of the first group transmitting the open signal O as is illustrated in fig. 1. Wireless control signal S is transmitted by cellular phone masts 420a, 420b,..., 420k in a conventional cellular phone mast network being utilized by a cellular phone provider, which network covers the main part of the distance, which the truck 200 has been or is going to travel. A first group of cellular phone masts 420b,..., 420k., corresponding to the masts which transmittal cover area is substantially covering at least part of the hazard affected area at that moment in time, are transmitting a first specific control signal C at the time indicated by the figure 1 to order a closed mode. The selection of masts may be performed in ways known to the skilled person, e.g. automatically by the cellular phone provider.

Given the fact that the truck 200 is travelling within the receiving distance from the control signal transmitters 400b, 400b,..., 400k, which all transmit the close signal C, the system 110 provided on board the truck 200 enables an automatic closure of the air intake means on the truck before entering into the cloud 300. This fact may be illustrated by assuming, that the close signal has been transmitted, either continuously or intermittently, during a time period leading up to the situation depicted in fig. 1, in which case the truck has received the close signal C before entering into the cloud 300.

In the periphery, e.g. mast 420a is transmitting the open signal O. One or more control signal transmitters may be transmitting an open signal O, when the hazardous cloud 300 is not in the vicinity of the area which the transmitting effect of the masts is covering. When the truck 200 has travelled a distance after the moment in time depicted in fig.1 it will be within receiving range of the mast 400a, and the system 110 according to the invention is in an advantageous embodiment arranged to open the air intake means again to let fresh and non-toxic air exchange with the driver's cabin's air for driver comfort and a new supply of oxygen. It is clear that one or more, e.g. a predetermined group of control signal transmitters 400 may transmit said open signal O, e.g. the group of transmitters 400 in the periphery surrounding the hazard area 300 at any given moment in time, e.g. variable in case the hazard is moving D.

Alternatively, the control signal S is not site specific but instead transmitted from one, a group or all transmitters within specific time intervals, either continuously or intermittently with fixed or varying intervals, e.g. the close signal C is transmitted with a fixed interval I during a certain time period, e.g. from the moment in time the presence of an airborne hazard has been confirmed, and to the moment in time, when the airborne hazard has dispersed and is no longer posing a hazard, after which period the open signal O is transmitted.

Preferably, a system for automatically controlling air intake in a vehicle according to the invention is provided integrally with a truck fleet management system (not shown), e.g. the DynaFleet® system. The Volvo fleet management system DynaFleet®, which is also available as an Online system, integrates pop-up colour displays at the central and on-board units with controls and interface in the front panels. It gives the fleet management central full control of vehicles, transports and driver administration, e.g. via the Internet. The Dynafleet® unit in the truck handles communications from the vehicle via the cellular phone network and/or a satellite phone system and some of the functions in DynaFleet® Online are based on the transmission of information to or from the truck via the cellular phone network. Preferably, the device according to the invention is provided integrally with the truck Dynafleet® unit. The central only needs a computer with an Internet connection in order to access DynaFleet's® full range of services. Functions are available such as Tracking, a way to see the location and status of each vehicle in real time. Preferably, the alert system 400 is provided integrally with the central DynaFleet® system.

As an alternative to being provided integrally with a truck fleet management system, said system 1, device 100 and/or the alert system 400 may be provided by it self, e.g. for retrofitting or provided integrally with external or vehicle components, such as the alert system incorporated in an existing wireless system or the device 100 provided with the air intake and/or a wireless communication unit in the vehicle.

The invention is taking advantage of the fact that the extensive coverage of cellular phone masts and other wireless transmitters have now reached a level in several regions of the world, which enables the present system to be suitable as the service area provided now is comparable to the expected gas coverage areas resulting from airborne hazards. This may also be the situation in less densely populated areas, when subjected to airborne hazards from large scale emergencies, which hazards could potentially influence or injure large vehicle drivers and consequently reduce road safety.

It has by the invention further been realized that even substantially stationary compartments, such as mobile homes, camping caravans, apartments, houses and large office buildings may be equipped with a system according to the invention.

## Claims

1. A system (1) for automatically controlling air intake in a vehicle (200), comprising
- information providing means (410) externally from the vehicle, for collecting information concerning the presence of an airborne hazard (300) with geographical extent and location in the vicinity of a transmitting means (420);
- information analysis means (430) provided externally from the vehicle for determining if the vehicle air intake is to be closed based on said information;
- said transmitting means (420) provided externally from the vehicle, comprising at least one transmitter having a transmit area arranged for transmittal of a wireless control signal (S) based on said information, where said control signal is a close signal when said information analysis means (430) has determined that the vehicle air intake is to be closed; and
- a vehicle air intake control device (100) provided in the vehicle, said device comprising
- means (110) for receiving said control signal (S), and
- air intake means (120) arranged for switching between an open mode and a closed mode in a vehicle compartment (130) based on the reception of said control signal (S), wherein the air intake means is switched to the open mode based on the absence of the receiving control signal when the vehicle is outside of the transmit area of said transmitting means (420), and, wherein the air intake means is switched to the closed mode when the vehicle is within the transmit area of said transmitting means (420).

2. A system according to claim 1, wherein the air intake means is further arranged to control said air intake means to switch to said open mode based on the absence of receiving the control signal within a predetermined opening time interval.

3. A system according to any of the preceding claims, wherein said transmitting means (420) is a selected group of transmitters comprising a plurality of transmitters.

4. A system according to any of the preceding claims, wherein said vehicle (200) is a heavy vehicle, in particular a truck.

5. A vehicle air intake control device (100) being part of a system according to any of the claims 1 to 4, comprising
- means (110) for receiving the control signal (S),
- air intake means (120) arranged for switching between an open mode and a closed mode in a vehicle compartment (130) based on the reception of the control signal, wherein the air intake means is switched to the closed mode when the vehicle is within the transmit area.

6. A device according to according to claim 5, wherein said air intake means (120) further comprise window actuator means (126).

7. A device according to according to claim 5 or 6, wherein said air intake means (120) is arranged to switch to said closed mode independently for each respective vehicle compartment (130) containing occupants, such as the driver's compartment, passenger's compartment, and/or transport compartment.

## Patentansprüche

1. System (1) zur automatischen Steuerung des Lufteinlasses in einem Fahrzeug (200), umfassend
- eine Informationsbereitstellungseinrichtung (410) außerhalb des Fahrzeugs zum Sammeln von Informationen hinsichtlich des Vorhandenseins einer durch die Luft übertragenen Gefahr (300) mit geographischer Erstreckung und Lage in der Nachbarschaft einer Sendeeinrichtung (420);
- eine außerhalb des Fahrzeugs bereitgestellte Informationsanalyseeinrichtung (430) zum Bestimmen auf der Basis der Information, ob der Fahrzeuglufteinlass zu schließen ist;
- die außerhalb des Fahrzeugs bereitgestellte Sendeeinrichtung (420), die wenigstens einen Sender mit einem Sendebereich umfasst, der für die Übermittlung eines drahtlosen Steuersignals (S) auf der Basis der Informationen konfiguriert ist, wobei das Steuersignal ein Schließsignal ist, wenn die Informationsanalyseeinrichtung (430) bestimmt hat, dass der Fahrzeuglufteinlass zu schließen ist; und
- eine in dem Fahrzeug vorgesehene Fahrzeuglufteinlasssteuerungsvorrichtung (100), wobei die Vorrichtung
- eine Einrichtung (110) zum Empfangen des Steuersignals (S), und
- eine Lufteinlasseinrichtung (120) umfasst, die für das Umschalten zwischen einem offenen Modus und einem geschlossenen Modus in einem Fahrzeuginnenraum (130) auf der Basis des Empfangs des Steuersignals (S) konfiguriert ist, wobei auf der Basis der Abwesenheit des Empfangssteuersignals, wenn sich das Fahrzeug außerhalb des Sendebereichs der Sendeeinrichtung (420) befindet, die Lufteinlasseinrichtung in den offenen Modus umgeschaltet wird und wobei die Lufteinlasseinrichtung in den geschlossenen Modus umgeschaltet wird, wenn sich das Fahrzeug innerhalb des Sendebereichs der Sendeeinrichtung (420) befindet.

2. System nach Anspruch 1, wobei die Lufteinlasseinrichtung weiterhin für die Steuerung der Lufteinlasseinrichtung zum Umschalten auf den offenen Modus auf der Basis der Abwesenheit des Empfangs des Steuersignals innerhalb eines vorherbestimmten Öffnungszeitintervalls konfiguriert ist.

3. System nach irgendeinem der vorhergehenden Ansprüche, wobei die Sendeeinrichtung (420) eine ausgewählte Gruppe von Sendern ist, die eine Vielzahl von Sendern umfasst.

4. System nach irgendeinem der vorhergehenden Ansprüche, wobei das Fahrzeug (200) ein Schwerfahrzeug, insbesondere ein Lastkraftwagen, ist.

5. Fahrzeuglufteinlasssteuerungsvorrichtung (100), die Teil eines Systems nach irgendeinem der Ansprüche 1 bis 4 ist, umfassend
- eine Einrichtung (110) zum Empfangen des Steuersignals (S),
- eine Lufteinlasseinrichtung (120), die für das Umschalten zwischen einem offenen Modus und einem geschlossenen Modus in einem Fahrzeuginnenraum (130) auf der Basis des Empfangs des Steuersignals konfiguriert ist, wobei die Lufteinlasseinrichtung in den geschlossenen Modus umgeschaltet wird, wenn sich das Fahrzeug innerhalb des Sendebereichs befindet.

6. Vorrichtung nach Anspruch 5, wobei die Lufteinlasseinrichtung (120) weiterhin eine Fensterbetätigungseinrichtung (126) umfasst.

7. Vorrichtung nach Anspruch 5 oder 6, wobei die Lufteinlasseinrichtung (120) für das Umschalten auf den geschlossenen Modus unabhängig für jeden jeweiligen Fahrzeuginnenraum (130) konfiguriert ist, der Insassen enthält, wie etwa die Fahrerkabine, den Fahrgastraum und/oder den Transportraum.

## Revendications

1. Système (1) pour la commande automatique d'admission d'air dans un véhicule (200), comprenant
- un moyen de fourniture d'informations (410) à l'extérieur du véhicule, pour collecter des informations concernant la présence d'un danger aérogène (300) avec l'étendue et l'emplacement géographique au voisinage d'un moyen de transmission (420) ;
- un moyen d'analyse d'informations (430) prévu à l'extérieur du véhicule pour déterminer si l'admission d'air dans le véhicule doit être fermée sur la base desdites informations ;
- ledit moyen de transmission (420) prévu à l'extérieur du véhicule, comprenant au moins un émetteur ayant une zone de transmission agencée pour la transmission d'un signal de commande sans fil (S) sur la base desdites informations, où ledit signal de commande est un signal de fermeture lorsque ledit moyen d'analyse d'informations (430) a déterminé que l'admission d'air dans le véhicule doit être fermée ; et
- un dispositif de commande d'admission d'air dans le véhicule (100) prévu dans le véhicule, ledit dispositif comprenant
- un moyen (110) pour recevoir ledit signal de commande (S), et
- un moyen d'admission d'air (120) agencé pour commuter entre un mode ouvert et un mode fermé dans un compartiment de véhicule (130) sur la base de la réception dudit signal de commande (S), où le moyen d'admission d'air est commuté vers le mode ouvert sur la base de l'absence du signal de commande de réception lorsque le véhicule est à l'extérieur de la zone de transmission dudit moyen de transmission (420), et, dans lequel le moyen d'admission d'air est commuté vers le mode fermé lorsque le véhicule est dans la zone de transmission dudit moyen de transmission (420).

2. Système selon la revendication 1, dans lequel le moyen d'admission d'air est agencé en outre pour commander ledit moyen d'admission d'air afin de commuter vers ledit mode ouvert sur la base de l'absence de réception du signal de commande dans un intervalle de temps d'ouverture prédéterminé.

3. Système selon l'une des revendications précédentes, dans lequel ledit moyen de transmission (420) est un groupe choisi d'émetteurs comprenant une pluralité d'émetteurs.

4. Système selon l'une des revendications précédentes, dans lequel ledit véhicule (200) est un véhicule poids lourd, en particulier un camion.

5. Dispositif de commande d'admission d'air dans un véhicule (100) faisant partie d'un système selon l'une des revendications 1 à 4, comprenant
- un moyen (110) pour recevoir le signal de commande (S),
- un moyen d'admission d'air (120) agencé pour commuter entre un mode ouvert et un mode fermé dans un compartiment de véhicule (130) sur la base de la réception du signal de commande, dans lequel le moyen d'admission d'air est commuté vers le mode fermé lorsque le véhicule est dans la zone de transmission.

6. Dispositif selon la revendication 5, dans lequel ledit moyen d'admission d'air (120) comprend en outre un moyen d'actionnement de fenêtre (126).

7. Dispositif selon la revendication 5 ou 6, dans lequel ledit moyen d'admission d'air (120) est agencé pour commuter vers ledit mode fermé indépendamment pour chaque compartiment de véhicule respectif (130) contenant des occupants, tel que le compartiment du conducteur, le compartiment des passagers et/ou le compartiment de transport.
